# EUROPÄISCHE PATENTSCHRIFT

(11) **EP 3 177 900 B1**
(45) Veröffentlichungstag und Bekanntmachung des Hinweises auf die Patenterteilung: **12.12.2018**
(21) Anmeldenummer: 15778194.9
(22) Anmeldetag: 16.07.2015
(51) Int. Cl.: G01K 1/00, B23K 26/34

(54) **SENSOREN SOWIE VERFAHREN ZUR HERSTELLUNG VON SENSOREN**
SENSORS AND PROCESS FOR PRODUCING SENSORS
CAPTEURS ET PROCÉDÉ DE FABRICATION DE CAPTEURS

(30) Priorität: 08.08.2014 DE 102014011552
(43) Veröffentlichungstag der Anmeldung: 14.06.2017
(73) Patentinhaber: Forschungszentrum Jülich GmbH (FJZ), 52425 Jülich (DE)
(72) Erfinder: ZHANG, Yanli, Beijing (CN); VAßEN, Robert, 52134 Herzogenrath (DE); MACK, Daniel, Emil, 50931 Köln (DE); MAUER, Georg, 47918 Tönigvorst (DE); GUILLON, Olivier, 52428 Jülich (DE)
(86) Internationale Anmeldenummer: PCT/DE2015/000356
(87) Internationale Veröffentlichungsnummer: WO 2016/019935

(56) Entgegenhaltungen:
- WO-A1-00/69235
- DE-A1-102005 007 792
- US-A1- 2004 202 886

## Beschreibung

Die Erfindung betrifft Sensoren im Allgemeinen, und insbesondere eingebettete Sensoren, die auf bzw. innerhalb einer Funktionsschicht angeordnet sind. Die Erfindung betrifft ferner ein Verfahren zur Herstellung solcher Sensoren.

### Stand der Technik

Sensoren sind dazu geeignet, spezifische Eigenschaften einer Umgebung zu messen. Dabei sind die Sensoren passiv im Gegensatz zu den Aktuatoren, welche die Umgebung verändern sollen.

Insbesondere bei Prozessen, bei denen hohe Temperaturen und große Wärmeströme auftreten, ist die Kontrolle und Überwachung von Prozessparametern von großer Wichtigkeit. Sofern kritische Prozessparameter in Echtzeit (*in situ*) aufgezeichnet werden können, können auftretende Störungen und Probleme sofort erkannt und entsprechende Lösungen möglicherweise noch direkt im Verarbeitungszyklus ergriffen werden.

Derzeit werden zum Zweck der *in-situ* Überwachung von im Betrieb befindlichen Turbinenschaufeln, bereits so genannte "intelligente Beschichtungen" hergestellt und eingesetzt, die vorteilhaft *in situ*, das heißt in Echtzeit, den Belastungszustand erfassen können und somit eine Anpassung der Betriebsbedingungen ermöglichen.

Bei den intelligenten Beschichtungen sind die Sensoren häufig vorteilhaft direkt innerhalb einer Funktionsschicht angeordnet (eingebettet). Dabei ist es vorteilhaft für die Lebensdauer der Funktionsschichten, wenn die mikrostrukturellen Eigenschaften der Funktionsschicht in direkter Nachbarschaft der Sensoren möglichst wenig verändert werden und die Strukturgrößen der Sensoren so klein wie möglich gehalten werden, um nur geringe thermomechanische Spannungen in den in der Regel spröden Funktionsschichten zu erzeugen.

Die Herstellung von eingebetteten Hochtemperatur-Sensoren erfolgt bislang durch thermische Spritzverfahren, durch Zerstäubung mittels lonenbeschuss oder durch Lichtbogen-Ablagerung. Dabei wird die Feinheit der Sensorstrukturen in der Regel entweder über Masken, die zunächst aufwändig auf das Substrat aufgebracht werden müssen, oder über Kollimatorenblenden, die entsprechend in den Materialstrahl eingebracht werden, erzeugt. Durch beide Methoden wird die Aufbringungseffizienz stark begrenzt.

So ist beispielsweise aus US 2004/202886 A1 ein Verfahren zur Herstellung eines Sensors auf der Oberfläche einer Funktionsschicht bekannt, wobei das Sensormaterial mit Hilfe eines dem Laser-Auftragsschweißen ähnlichen Verfahrens auf die Oberfläche der Funktionsschicht aufgebracht wird.

Den bisher verwendeten Verfahren gemein ist der notwendig begrenzente Wärmeeintrag auf das Substrat/Bauteil, der oberhalb kritischer Raten zu einer Schädigung von Funktionsschicht oder Bauteil führt.

Aus WO 00/69235 A1 ist zudem ein Verfahren zum Aufbringen von Material auf eine Oberfläche bekannt, bei dem das Material zumindest teilweise in einem Laserstrahl aufgeschmolzen und im Anschluss auf die Oberfläche aufgebracht wird. Die aufgeführten Materialien und Oberflächen eignen sich zur Herstellung elektronischer Bauteile, also auch von Sensoren. Um einerseits genug Energie bereitzustellen, um das Prozessmaterial auf die Oberfläche aufbringen zu können, andererseits aber dabei den Energieübertrag auf die Oberfläche zu minimieren, wird dort vorgeschlagen, den Energieübertrag auf Oberfläche und Prozessmaterial durch Variation der Parameter Partikelgeschwindigkeit, Winkel zwischen Partikelzuführung und Laserstrahl sowie Verweildauer der Partikel innerhalb des Laserstrahs zu optimieren.

### Aufgabe und Lösung

Die Aufgabe der Erfindung ist es, unterbrechungsfreie und nahezu dichte Sensorstrukturen für den Hochtemperatureinsatz bereit zu stellen, die auf oder auch vorteilhaft in einer auf einem Bauteil (Substrat) angeordneten Funktionsschicht eingebettet vorliegen können, ohne die thermomechanischen Eigenschaften der umgebenden Funktionsschicht wesentlich zu beeinträchtigen und zudem vorteilhaft auch direkt *in-situ*, d. h. in Echtzeit, ausgelesen werden können.

Ferner ist es die Aufgabe der Erfindung, ein Verfahren zur Herstellung solcher Sensorstrukturen bereit zu stellen, welches deutlich einfacher und somit kostengünstiger ist, als die bislang bekannten Herstellungsverfahren von Sensoren für diesen Zweck.

Die Erfindung wird gelöst durch ein Verfahren zur Herstellung von Sensoren gemäß Anspruch 1, sowie durch Sensoren gemäß Anspruch 12. Vorteilhafte Ausgestaltungen des Verfahrens und der Sensoren finden sich in den jeweils darauf rückbezogenen Ansprüchen wieder.

### Gegenstand der Erfindung

Diese Erfindung betrifft im Allgemeinen die Bereitstellung von Sensorstrukturen (Sensoren) für den Hochtemperatureinsatz, sowie ein Verfahren zur Herstellung derselben. Unter Hochtemperatureinsatz werden Temperaturen größer als 500 °C verstanden, insbesondere Temperaturen bis ca. 1500 °C. Typische Größenordnungen der Funktionsschichten liegen dabei im Bereich von 200 µm bis 3 mm. Die bereitgestellten Sensorstrukturen weisen dabei Strukturgrößen auf, die deutlich kleiner sind als die Funktionsschichtdicken, insbesondere Größen im Bereich von typischerweise 50 bis 500 µm.
Insbesondere betrifft diese Erfindung ein neues Herstellungsverfahren, bei dem ein oder mehrere entsprechende Sensoren direkt auf eine Funktionsschicht aufgebracht oder auch innerhalb einer Funktionsschicht eingebettet werden, und wobei die Herstellung mittels eines dem Laser-Auftragsschweißen ähnlichen Verfahrens ohne den Einsatz von Masken erfolgt. Unter einer Funktionsschicht wird insbesondere ein thermisch hochbelastetes Bauteil häufig mit komplexer Form verstanden.

Im Rahmen dieser Erfindung ist unter einem Sensor bzw. einer Sensorstruktur eine aus Linien erzeugte Struktur zu verstehen, welcher bestimmte physikalische oder chemische Eigenschaften, wie beispielsweise Temperatur, Druck, Beschleunigung oder Spannung in seiner direkten Umgebung qualitativ oder auch quantitativ erfassen kann. Ein Sensor wandelt diese gemessenen Größen in ein elektrisches Signal, z. B. eine Spannung um, welches über Kabel leicht vom Sensor abgegriffen werden kann. Dazu kann der Sensor entweder elektrisch leitfähig ausgestaltet sein oder als keramischer Sensor selbst Spannungen erzeugen (Piezoeffekt).

Als Temperatursensoren, die die absolute und/oder relative Temperatur oder auch Temperaturdifferenzen in der direkten Umgebung erfassen können, eignen sich beispielsweise metallische Heiß- oder Kaltleiter, bei denen sich der innere Widerstand mit der Temperatur ändert, und die typischerweise Metalle, Metalloxide oder auch Halbleiter umfassen. Des Weiteren sind Thermoelemente als Sensoren zu nennen, bei denen zwei Materialien, typischerweise Metalle, mit unterschiedlichen Thermospannungen verbunden werden und eine mit der Temperatur korrelierende Spannung erzeugen.

Sensoren zur Erfassung von Druck, Spannungen oder Kräften innerhalb einer Schicht, umfassen typischerweise piezoelektrische Elemente, wie zum Beispiel keramische Materialien (z. B. Perowskite, wie BaTiO₃), welche Längenänderungen oder Scherkräfte innerhalb der Umgebung in ein elektrisches Signal umzuwandeln vermögen. Des Weiteren werden auch Heiß- oder Kaltleiter, bei denen sich der effektive Widerstand unter elastischer Verformung ändert, und die typischerweise Metalle, Metalloxide oder auch Halbleiter umfassen zur Erfassung von Druck und Spannungen verwendet.

Als *"in-situ"* Sensor wird im Rahmen der Erfindung ein Sensor bezeichnet, der die zu messenden Größen, wie beispielsweise die Temperatur, den Druck oder auch Spannungen, in Echtzeit erfassen kann.

Unter Funktionsschichten, die auf einem Bauteil für einen Hochtemperatureinsatz eingesetzt werden, werden im Rahmen dieser Erfindung vorwiegend Schutzschichten und dabei insbesondere keramische Wärmedämmschichten mit geringer Wärmeleitfähigkeit, Isolationsschichten, Oxidations- (bzw. Korrosions-)Schutzschichten zur Verbesserung der Beständigkeit in sauerstoffhaltiger oder korrosiver Atmosphäre oder umgebungsstabile (Thermal-) Schutzschichten für Faserverbundwerkstoffe verstanden. Letzte sind auch unter dem Namen TBC (thermal barrier coating) oder EBC (environmental barrier coating) bekannt. Solche Funktionsschichten umfassen beispielsweise Isolationsschichten, die regelmäßig beim Fügen von SOFC-Batterien eingesetzt werden. Im Rahmen der Erfindung soll unter einer Funktionsschicht aber auch eine beliebige Zwischenschicht auf einem Bauteil verstanden werden, auf die ggfs. erst eine Funktionsschicht mit den vorgenannten Funktionen angeordnet werden kann.

Als für diese Funktionsschichten geeignete Materialien haben sich unter anderem MgAl₂O₄, Al₂O₃, TiO₂, Mullit, ZrO₂, CaO/MgO und ZrO₂, Y₂O₃-8YSZ, CeO₂ und YSZ, LaZrO₇, GdZrO₇ sowie Y-Si-O herausgestellt.

Die Erfindung beschreibt ferner ein Herstellungsverfahren, bei dem typischerweise ein oder mehrere sehr kleine Sensoren, insbesondere so genannte *in-situ* Sensoren in oder auf einer Hochtemperatur-Funktionsschicht hergestellt werden. Bei dem Verfahren wird ein dem Laser-Auftragsschweißen ähnliches Verfahren angewendet. Dabei wird der Sensor in Form von entsprechend geeignetem Sensormaterial auf die Oberfläche einer Funktionsschicht aufgebracht, wobei der Aufbringungsschritt mit Hilfe eines Lasers erfolgt. Die Funktionsschicht selbst ist in der Regel dabei bereits zuvor auf der Oberfläche eines Bauteils (Substrat) angeordnet worden, beispielsweise einer Turbinenschaufel. Die typischen Struktur/Linien-Durchmesser der abgeschiedenen Sensorstrukturen liegen mit 50 bis 500 µm regelmäßig bei weniger als der Hälfte der Schichtdicke der Funktionsschicht.

Es ist wünschenswert, dass durch die Aufbringung des Sensormaterials (Beschichtung) mit Hilfe eines Lasers die Oberflächenbeschaffenheit des Substrates und insbesondere der darauf aufgebrachten Funktionsschicht vorteilhaft nicht verändert wird, oder zumindest nur minimal beeinflusst wird. Dazu müssen die Parameter des Verfahrens, die den Leistungseintrag auf das Substrat bestimmen, entsprechend angepasst werden.

Erfindungsgemäß wird dies sichergestellt, indem die direkte Einstrahlung des fokussierten Prozesslasers auf das Substrat durch eine hinreichend hohe Partikelflussrate des im Prozess in den Arbeitsbereich des Lasers geförderten Pulvers abgeschwächt wird. Gleichzeitig ermöglicht die Wahl eines, auf Höhe des Substrates im Vergleich zum Pulver, kleineren Fokusdurchmessers für den Laser das Aufschmelzen der Pulverpartikel nahe des Leistungszentrum des Lasers.

Das mit Hilfe eines Lasers aufgeschmolzene Sensormaterial wird auf der Oberfläche der Funktionsschicht in Form einzelner Linien abgeschieden, und kann dort vorteilhaft als Sensor, z. B. in Form von elektrisch leitfähigen Leiterbahnen ausgestaltet werden. Durch eine zusätzliche elektrische Kontaktierung kann der Sensor anschließend als solcher verwendet werden. Typischerweise erfolgt dies in einem thermisch oder mechanisch weniger belasteten Bereich. Hier können dann auch durch andere Verfahren größere Kontaktpunkte erzeugt werden.

Im Fall eines Temperatursensors kann beispielsweise zunächst eine schmale Beschichtung (Leiterbahn) umfassend ein erstes metallisches Pulver auf die Funktionsschicht aufgebracht werden, welches als ein erster Leiter fungiert. Im Anschluss wird eine zweite schmale Beschichtung umfassend ein weiteres metallisches Pulver derart auf die Funktionsschicht aufgebracht, dass beide Beschichtungen (Leiter) über einen Kontaktpunkt elektrisch leitend verbunden sind. Eine Konstruktion aus zwei Leitern aus unterschiedlichen Materialen, die einen gemeinsamen Kontaktpunkt aufweisen, kann bereits als Temperatursensor fungieren.

Die elektrische Kontaktierung des auf der Oberfläche einer Funktionsschicht aufgebauten Sensors erfolgt im einfachsten Fall über elektrisch leitende Kabel. Im Fall eines Temperatur-sensors können dazu sogenannte Kompensationsdrähte (Ausgleichsdrähte) eingesetzt werden, die in Abhängigkeit von dem jeweils kontaktierten Leiter in einem zulässigen Temperaturbereich die gleichen elektrischen Eigenschaften besitzen. Im Betrieb eines Sensors ist dieser dann in der Regel über elektrisch leitende Kabel, bzw. über Kompensationsdrähte mit einem externen Mess- und Aufnahmegerät verbunden.

In der Regel aber nicht zwingend ist vorgesehen, dass im Anschluss an die Herstellung eines oder mehrerer Sensoren auf einer ersten Funktionsschicht, weiteres Material flächig auf diese Funktionsschicht und zumindest auf einen Teil des darauf abgeschiedenen Sensors aufgetragen wird. Dabei können vorteilhaft die Bereiche, an denen die elektrische Kontaktierung des Sensors, bzw. die Kontaktierung von Leiterbahnen und Kompensationsdrähten erfolgt, ausgespart werden.

Auf diese Weise kann der erfindungsgemäß hergestellte Sensor vorteilhaft ganz oder teilweise in einer weiteren Schicht eingebettet werden.

Diese weitere Schicht kann ebenfalls eine Funktionsschicht aus ähnlichen Materialien sein, wie sie bereits für die erste Funktionsschicht angegeben wurden. Als Aufbringungsmethode für das flächige Aufbringen dieser weiteren Schicht eignet sich beispielsweise das atmosphärische Plasmaspritzen.

Eine vorteilhafte Ausgestaltung der Erfindung sieht vor, dass auch mehrere Sensoren derselben oder unterschiedlicher Art auf einer ersten Funktionsschicht erfindungsgemäß aufgebracht werden. So könnte beispielsweise sowohl ein Temperatur- als auch ein Spannungssensor erfindungsgemäß auf einer Funktionsschicht hergestellt werden.

Durch das sich anschließende Aufbringen einer weiteren Funktionsschicht könnten insofern die Sensoren auf der ersten Funktionsschicht gleichzeitig eingebettet werden.

Eine weitere vorteilhafte Ausgestaltung der Erfindung sieht vor, dass mehrere Sensoren derselben oder unterschiedlicher Art nicht nur auf einer ersten Funktionsschicht aufgebracht und in einer weiteren Funktionsschicht eingebettet werden, sondern dass auf dieser optionalen zweiten Funktionsschicht ebenfalls weitere Sensoren derselben oder unterschiedlicher Art erfindungsgemäß aufgebracht werden können.

Auf diese Weise würden Sensoren vorteilhaft in unterschiedlichen Ebenen bezogen auf das Bauteil hergestellt werden können. Die Sensoren können dabei - bezogen auf das Bauteilsowohl direkt übereinander als auch versetzt angeordnet sein.

Durch die Anordnung von Sensoren in unterschiedlichen Ebenen innerhalb eines auf einem Bauteil angeordneten Funktionsschichtsystems können somit vorteilhaft Aussagen zu einer Eigenschaft innerhalb einer Funktionsschicht in Abhängigkeit vom Abstand zum Bauteil gemacht werden, z. B. einem Temperaturverlauf senkrecht zum Bauteil.

Für die Ausbildung eines Temperatur-Sensors auf der Oberfläche des Substrates werden in der Regel wenigstens zwei unterschiedliche Sensormaterialien benötigt. Beispielsweise können als Sensormaterial Alumel® oder Chromel® für die beiden Leiterbahnen eingesetzt werden, oder auch Platin und Platin-Rhodium-Legierungen, oder auch NiCr und Ni. Das eingesetzte Sensormaterial kann von einem Fachmann in der Regel entsprechend der zu erwartenden Temperatur ausgewählt werden.

Für die Ausbildung eines piezoelektrischen Druck-, Spannungs- oder Kraft-Sensors können im Wesentlichen piezoelektrische Keramiken (z. B. Blei-Zirkonat-Titanat-Keramiken (PZT)) eingesetzt werden, die in der Regel als polykristalline Materialien durch Sinterprozesse verarbeitet werden und eine vergleichsweise niedrige Schmelz- bzw. Sintertemperatur besitzen. Gegenüber Materialien, wie beispielsweise Quarz, Turmalin und Galliumphosphat, oder Lithiumniobat, weisen sie zudem eine piezoelektrische Konstante auf, die in der Regel zwei Größenordnungen größer ist. Außerdem können als Spannungs- oder Dehnungs-Sensoren metallische Legierungen (z. B. Ni-20Cr, Cu-45Ni, Pd-13Cr oder Cu-12Mn-2Ni in GewichtsProzent) verwendet werden, deren innerer Widerstand sich unter Druck oder Zug wesentlich ändert.

Das Sensormaterial kann dem Laserstrahl als Pulver mit einer Partikelgröße zwischen 1 µm und 200 µm zugeführt werden, welches vorteilhaft nach dem Aufbringen in Form von unterbrechungsfreien Bahnen, z. B. elektrisch leitenden Verbindungen, vorliegt.

Im Unterschied zu den bisherigen Aufbringungsverfahren für ähnliche Sensoren, wie beispielsweise das thermische Spritzverfahren, die Zerstäubung durch lonenbeschuss (Sputtern) oder die Lichtbogen-Ablagerung, bei denen regelmäßig eine Abdeckmaske oder ein Spaltkollimator eingesetzt werden muss, ist das erfindungsgemäße Verfahren, allein auf Grund der Zeitersparnis und weil keine aufwändige Abdeckmaske eingesetzt werden muss bzw. eine erheblich höhere Auftragseffizienz erzielt wird, eine sehr viel komfortablere Aufbringungsmethode, um einen kleinen Sensor aus Pulver auf eine Funktionsschicht aufzubringen.

Mit dem erfindungsgemäßen Verfahren ist es möglich, sehr haltbare, ggfs. auch in Echtzeit arbeitende Sensoren in nächster Nähe zu oder in einer Schicht bereit zu stellen, die selbst keine oder zumindest nur in sehr geringem Ausmaß nachteilige Auswirkungen auf diese Schicht ausüben, die durch sie überwacht werden soll.

Die Lösung der gestellten Aufgabe wird dadurch erreicht, dass mit dem erfindungsgemäßen Verfahren durch das Aufbringen oder Einbetten von Sensoren auf bzw. in Funktionsschichten, wie beispielsweise Wärmedämmschichten oder anderen Schutzschichten, ohne den Einsatz von Masken, so genannte Intelligente Beschichtungen hergestellt werden können. Der Schutz des Substrats vor temperaturinduzierter Degradation wird dabei durch den stark fokussierten Energieeintrag des Laserstrahls und dessen Abschattung durch das Prozesspulver sichergestellt.

In einer vorteilhaften Ausgestaltung der Erfindung erfolgt die Aufbringung des Sensors auf der Oberfläche einer Funktionsschicht mit Hilfe eines Lasers, und kann beispielsweise mit einer kommerziellen Laser-Auftragsschweißvorrichtung durchgeführt werden.

Bei dem erfindungsgemäßen Verfahren wird einem fokussierten Laserstrahl entsprechendes Sensormaterial in Form von Pulver oder einem Draht zugeführt. Das im Laserstrahl aufgeschmolzene Sensormaterial wird anschließend auf die Oberfläche einer Funktionsschicht aufgebracht. Welches Sensormaterial eingesetzt wird, ist abhängig davon, welche Art von Sensor hergestellt werden soll.

Bei dem erfindungsgemäßen Verfahren kommt es darauf an, dass die Zufuhrrate des Pulvers bzw. die Relativbewegung zum aufgebrachten Draht und die Energiedichte des Lasers derart aufeinander abgestimmt werden, dass der Energieeintrag des Lasers zwar zum Aufschmelzen zumindest eines Teils des zugeführten Pulvers bzw. des Drahtes ausreicht, darüber hinaus aber ein zusätzlicher Wärmeeintrag in das Substrat vorteilhaft begrenzt wird. Dabei ist sicherzustellen, dass die Oberflächentemperatur des Substrates während der Aufbringung die Schmelztemperatur des Substrates nicht erreicht, vorteilhaft sogar deutlich darunter bleibt.

Eine insgesamt erhöhte Temperatur des Substrates kann aber in einigen Fällen die Haftung zwischen aufgebrachtem Sensor und Substrat verbessern, bzw. ein langsames Erstarren des geschmolzenen Sensormaterials auf dem Substrat unterstützen.

In einer Ausgestaltung der Erfindung kann alternativ beispielsweise auch ein Draht aus dem entsprechenden Sensormaterial bereits direkt auf der Oberfläche einer Funktionsschicht angeordnet werden, der im Anschluss mit Hilfe des Laserstrahls auf der Oberfläche der Funktionsschicht aufgeschmolzen wird. Auch diese Verfahrensvariante ist bei dem erfindungsgemäßen Verfahren mit eingeschlossen.

Das im Laserstrahl aufgeschmolzene Pulver kann nach der Auftragung auf die Funktionsschicht dort auf der Oberfläche wieder abkühlen und so eine dichte Beschichtung, beispielsweise in Form von unterbrechungsfreien Leiterbahnen, ausbilden. Diese Beschichtung ist in der Regel punkt- oder linienförmig, je nach relativer Bewegung zwischen dem Laser und der Oberfläche der Funktionsschicht.

Da die Aufbringung des Sensormaterials auf die Funktionsschicht aus der Schmelze erfolgt, zeigt die Beschichtung vorteilhaft ein porenfreies und dichtes Gefüge, bei dem keine Korn- oder Phasengrenzen auftreten, wie sie beispielsweise bei einer gesinterten Beschichtung nach dem Stand der Technik auftreten würde.

In einer speziellen Ausgestaltung des Verfahrens kann die Aufbringung des Sensormaterials zudem unter Schutzgas erfolgen. Das Aufbringen unter Schutzgas hat den Vorteil, dass Oxidationsprozesse weitgehend vermieden werden können. Insbesondere können so dem Laser zugeführte kleine Partikel vor einer Oxidation bei hohen Temperaturen geschützt werden.

Als Schutzgas kann insbesondere Argon oder auch N₂ verwendet werden.

Als Pulver bzw. als Draht können, je nach Wahl des Sensors, sowohl metallische als auch keramische Materialien oder auch Mischungen aus metallischen und keramischen Materialien aufgebracht werden. Die verwendete Pulvergröße liegt vorteilhaft zwischen 1 µm und 200 µm, insbesondere zwischen 2 µm und 50 µm. Bei Verwendung eines Drahtes liegen die bevorzugten Drahtdurchmesser im Bereich von 50 bis 1000 µm, insbesondere zwischen 50 und 150 µm.

In einer speziellen Ausgestaltung des Verfahren zur Herstellung eines Sensors wird nach der Aufbringung des Sensormaterials auf der Funktionsschicht und gegebenenfalls der entsprechenden Kontaktierung zum Auslesen des Sensors, eine weitere Schicht auf die Funktionsschicht und zumindest teilweise auf einen auf dieser angeordneten Sensor aufgebracht. Dadurch kann der Sensor zum großen Teil eingeschlossen und somit vorteilhaft geschützt werden. Insbesondere bei Temperatursensoren kann eine äußere Beeinflussung der Materialien zu einem signifikanten Einfluss auf die generierte Thermospannung führen, und sollte daher weitgehend vermieden werden.

Als Material für diese weitere Schicht eignet sich insbesondere dasselbe Material, wie es bereits auch für die Funktionsschicht verwendet wurde, also MgAl₂O₄, Al₂O₃, TiO₂, Mullit, ZrO₂, CaO/MgO und ZrO₂, Y₂O₃-8YSZ, CeO₂ und YSZ, Y₃Al₅O₁₂, LaZrO₇, GdZrO₇ sowie Y-Si-O. Es können aber auch andere Materialien auf die eigentliche Funktionsschicht und den oder die Sensoren aufgebracht werden, die lediglich als Schutzschicht dienen.

Als Aufbringungsmethode für diese weitere Schicht ist unter anderem das atmosphärische Plasmaspritzen geeignet. Weitere geeignete Verfahren zum Aufbringen dieser zweiten Funktionsschicht sind das Abscheiden aus der Gasphase, wie beispielsweise das EB-PVD-Verfahren (Electron-Beam Physical Vapor Deposition), oder auch nasschemische Prozesse, wie das Foliengießen, mit einem nachfolgenden Sinterschritt.

Die Schichtdicke der optional zusätzlich aufzubringenden Schicht kann zwischen 10 µm und mehr als 10 mm betragen. Insbesondere kann die Schichtdicke im Bereich zwischen 100 µm und 1000 µm liegen.

Mit dem vorgestellten erfindungsgemäßen Verfahren lassen sich auf einfache Weise und ohne die Verwendung von aufwändigen Masken insbesondere Temperatursensoren, Dehnungsmessungssensoren, Flusssensoren, Beschleunigungssensoren oder ähnliche Sensoren auf der Oberfläche von Funktionsschichten, wie beispielsweise Wärmedämmschichten, Isolationsschichten oder sonstige Schutzschichten herstellen. Dadurch können die chemischen und physikalischen Eigenschaften solcher Schichten teilweise sogar in Echtzeit erfasst und ausgewertet werden.

Als Einsatzgebiete für die vorgenannten Sensoren sind vorzugsweise hochtemperaturbelastete Bauteile, wie Turbinenschaufeln oder sonstigen Rotorblätter, aber auch andere Maschinenbauteile zu nennen, bei denen eine Überwachung von chemischen oder physikalischen Eigenschaften wünschenswert ist. Ebenso ist die Verwendung der erfindungsgemäßen Sensoren aber auch auf elektrisch schlecht leitenden Bauteilen, wie beispielsweise Hochleistungselektronik-Bauteilen, porösen Membranträgern oder Batteriesubstraten denkbar. Die Nutzung von Elektroden, die ebenfalls über das hier beschriebene, erfindungsgemäße Verfahren herstellbar sind, in leitfähigen Schichten zur Widerstandsmessung als Maß für eine Veränderung bzw. eine Degradation ist ebenfalls als vorteilhaftes Anwendungsgebiet der Erfindung zu nennen.

Es hat sich gezeigt, dass eine erfindungsgemäß hergestellte Leiterbahn eines Sensors leicht von einer solchen unterschieden werden kann, die über die bislang üblichen Aufbringungsmethoden, wie Plasmaspritzen unter Anwendung von Masken erhalten wird.

Einerseits erfolgt die Abscheidung auf der Funktionsschicht nach einem vorherigen Aufschmelzen des Sensormaterials. Beim Abkühlen bildet sich somit eine sehr dichte und porenfreie Leiterbahn aus. Als porenfrei im Sinne der Erfindung wird ein Material mit einer Porosität von weniger als 1 Vol.-%, insbesondere von weniger als 0,5 Vol.-% verstanden. Ein Schnittbild würde insofern keine Korn- oder Phasengrenzen zeigen. Damit ist eine Unterscheidung zu solchen Leiterbahnen möglich, die beispielsweise über einen Sinterschritt gebildet werden, bei dem Partikel oder Agglomerate zusammensintern und in der Regel eine größere Porosität als vorgenannt zeigen.

Zudem werden durch den Einsatz von Masken bei den bislang bekannten Herstellungsverfahren von Sensoren, wie beispielsweise dem Plasmaspritzen, regelmäßig Leiterbahnen erzeugt, die herstellungsbedingt jeweils sehr steile Flanken aufweisen. Demgegenüber zeigen die erfindungsgemäß aufgebrachten Leiterbahnen einen Querschnitt, mit einer Umhüllenden, die eher flach ausgestaltete Flanken zeigt.

Im Allgemeinen zeigt der charakteristische Querschnitt einer Leiterbahn, die erfindungsgemäß aufgebracht wird, einen insgesamt mehr bogenförmigen Verlauf, während eine Leiterbahn, die gemäß dem Stand der Technik hergestellt wurde, im Vergleich dazu im zentralen Bereich einen nahezu parallel zur Oberfläche der Funktionsschicht verlaufenden abgeflachten Querschnitt zeigt und zudem deutlich steilere Flanken aufweist. Dies liegt darin begründet, dass das Plasmaspritzen im Prinzip eine Methode zum flächigen, parallelen Aufbringen von Material ist, während das erfindungsgemäße Verfahren vorteilhaft zur Aufbringung von Linien oder Punkten geeignet ist.

Zusammenfassend lässt sich sagen, dass die Erfindung ein deutlich verbessertes Verfahren zur Herstellung von Sensoren, insbesondere auch von *in-situ* Sensoren bereit stellt, wobei die Sensoren auch auf einer teilweise sehr groben Funktionsschicht abgeschieden werden können, ohne dass wie bislang üblich aufwändige Masken eingesetzt werden müssen. Durch die leichte Anpassung der Verfahrensparameter ist eine breite Anwendung sowohl in Bezug auf den herzustellenden Sensor, als auch auf die zu detektierende Funktionsschicht gegeben. Vorteilhaft kann durch das erfindungsgemäße Verfahren erreicht werden, dass während der Aufbringung des Sensors die Oberflächentemperatur der Funktionsschicht nicht über die Schmelztemperatur ansteigt und eine Beeinflussung durch die Sensorherstellung so weitgehend vermieden werden kann.

Durch das erfindungsgemäße Verfahren sind vorteilhaft auch *in situ* Sensoren, das heißt in Echtzeit messende Sensoren herstellbar, die den Belastungszustand der Umgebung erfassen und somit eine zeitnahe Anpassung der Betriebsbedingungen ermöglichen können.

Die Erfindung ermöglicht vorteilhaft die Abscheidung von feinen Linienstrukturen (Sensorbahnen) als Sensorstrukturen, die so homogen bzw. einschlussfrei sind, dass elektrische und mechanische Spannungen ohne Unterbrechung/Unstetigkeiten übertragen werden können.

### Spezieller Beschreibungsteil

Nachfolgend wird die Erfindung, deren besondere Vorteile und neue Anwendungen anhand von konkreten Ausführungsbeispielen und mehreren Figuren näher erläutert, ohne dass dadurch eine Einschränkung des Schutzbereiches erfolgen soll. Ein Fachmann ist ohne weiteres in der Lage, je nach Aufgabenstellung, verschiedene Abwandlungen und Alternativen des hier dargestellten Verfahrens zu wählen, ohne den Gegenstand der Erfindung zu verlassen oder selbst erfinderisch tätig werden zu müssen.

Das erfindungsgemäße Verfahren zur Herstellung von Sensoren ist auch auf anderen Schaufelblättern, anderen Turbinenteilen oder sonstigen Maschinenteilen anwendbar, wobei die Vorzüge der Erfindung insbesondere bei Dampf- und Gasturbinenschaufeln oder anderen Flügelrädern gegeben sind, die in der Regel einer hohen Temperaturbelastung ausgesetzt sind.

Es zeigen die
- Figur 1:: Schematische Darstellung der Materialzuführung bei einer Vorrichtung zum Laser-Auftragsscheißen nach dem Stand der Technik (a) und schematische Darstellung von beispielhafter Materialzuführung und Laserfokussierung bei der erfindungsgemäßen Prozessführung (b).
- Figur 2:: Schematische Schnittzeichnung (a) und Draufsicht (b) einer Funktionsschicht mit einem erfindungsgemäß aufgebrachten Temperatursensor sowie einer optional darauf aufgebrachten weiteren Schicht.
- Figur 3:: Schematische Draufsicht einer Funktionsschicht mit einem erfindungsgemäß aufgebrachten Dehnungssensor sowie einer darauf aufgebrachten weiteren Schicht.
- Figur 4:: Draufsicht auf eine Funktionsschicht mit einem erfindungsgemäß darauf angeordneten K-Typ-Temperatursensor.
- Figur 5:: Diagramm der durch die Temperatursensoren ermittelten Temperaturen in Anhängigkeit von der Aufheizzeit; Vergleich eines erfindungsgemäßen Sensors gegenüber einem Referenzsensor.
- Figur 6:: Oberflächenprofil einer Funktionsschicht mit einem erfindungsgemäß aufgebrachten Temperatursensor (a) sowie einer optional darauf aufgebrachten weiteren Schicht (b).
- Figur 7:: Schematische Querschnitte von auf einer Funktionsschicht aufgebrachten Leiterbahnen, Vergleich einer erfindungsgemäß aufgebrachten Leiterbahn gegenüber einer über konventionelle Methoden aufgebrachten Leiterbahn.
- Figur 8:: Querschnittsansicht von einer erfindungsgemäß auf einer Funktionsschicht aufgebrachten und eingebetteten Leiterbahn.

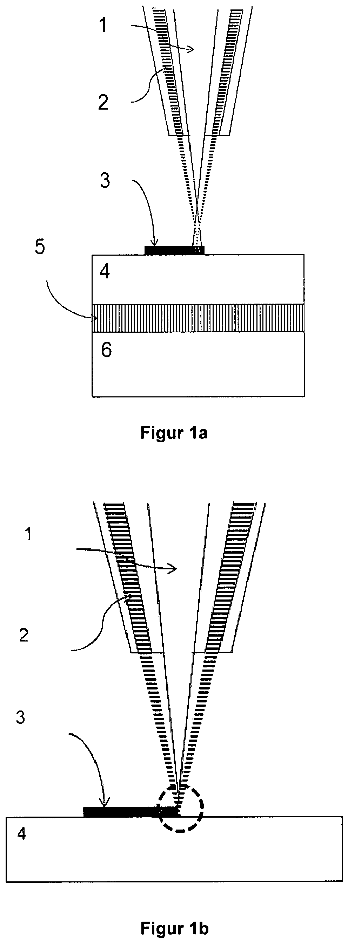

In der Figur 1 wird schematisch die Aufbringung des Sensormaterials verdeutlicht, so wie sie auch bei der vorliegenden Erfindung angewendet werden kann. Das Sensormaterial wird einem Laserstrahl zugeführt, ähnlich wie es bei einer Vorrichtung zum Laser-Auftragsschweißen vorgesehen ist (Figur 1a).

Das aufzubringende Pulver (Sensormaterial) (2), welches später den Sensor bildet, kann dabei typischerweise über eine seitlich (lateral) angeordnete Pulverdüse, über mehrere seitlich (radial) angeordnete Pulverdüsen oder auch über eine konzentrisch (koaxial) angeordnete Pulverdüse erfolgen.

Als typischer Abstand zwischen der Funktionsschicht und dem Laser können einige Millimeter, beispielsweise 7 mm, gewählt werden.

Das zugeführte und im Laserstrahl (1) zunächst aufgeschmolzene pulverförmige Material (2) scheidet sich auf der Oberfläche der Funktionsschicht (4), z. B. einer keramischen Isolationsschicht, nach der Verfestigung als Beschichtung (3), z. B. ein metallischer linearer Leiter ab. Die Funktionsschicht (4) ist - gegebenenfalls über eine weitere Zwischenschicht (5) (Bondcoat) - auf dem metallischen Bauteil (Substrat) (6), z. B. einer Turbinenschaufel, angeordnet.

Die erfindungsgemäße Führung des Prozesses kann dabei z. B. erreicht werden, indem zum einen der Fokusquerschnitt der Pulverzuführung (2) auf der Substratebene größer gewählt wird, als der Querschnitt des fokussierten Laserstrahls (1) (Figur 1 (b)), so dass bei hinreichend hoher Pulverzuführrate eine wesentliche Abschattung des Substrates gegen den Laser erfolgt, und zum anderen die Verfahrgeschwindigkeit so angepasst wird, dass der im zentralen Bereich des Laserspots aufgeschmolzenen Anteil des Prozesspulvers als kontinuierliche Spur mit guter Haftung auf dem, unter Umständen rauhen, Substrat abgeschieden wird.

Alternativ zu der Aufbringung über ein Pulver, kann dem Laserstrahl auch direkt ein vorgefertigter Draht aus dem Sensormaterial zugeführt werden, oder alternativ bereits auf der Oberfläche der Funktionsschicht angeordnet werden, der mit Hilfe eines Lasers zu einer entsprechenden Beschichtung/Leiterbahn aufgeschmolzen wird (in Figur 1 aber nicht dargestellt).

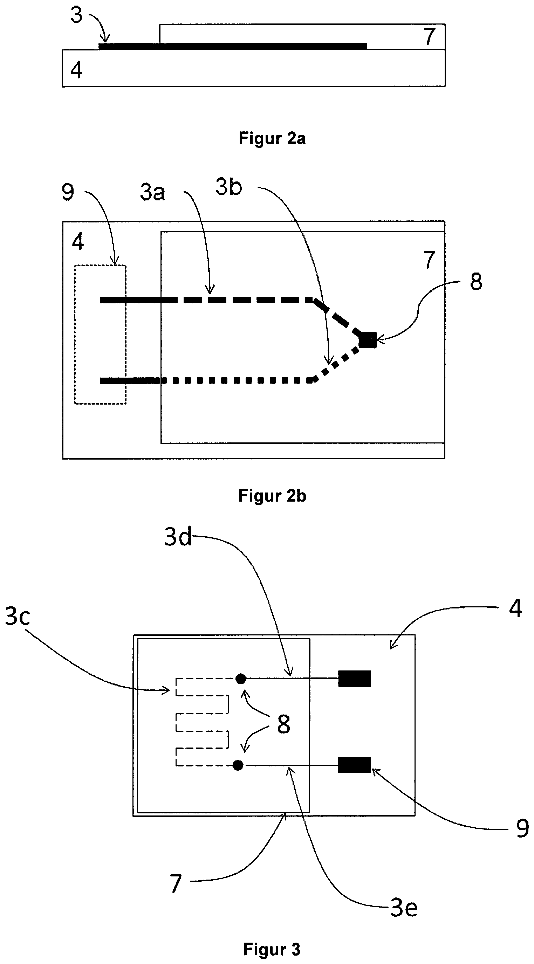

In der Figur 2a ist ein schematischer Querschnitt durch die Funktionsschicht (4) sowie den erfindungsgemäß darauf aufgebrachten Sensor (3) dargestellt. Das Bauteil sowie eine optionale zusätzliche Zwischenschicht sind in dieser Figur nicht dargestellt. Ferner ist als eine Ausgestaltung der Erfindung eine weitere (zweite) Funktionsschicht (7) eingezeichnet, die beispielsweise Teile des Sensors und der ersten Funktionsschicht abdeckt, den Bereich der Kontaktierung des Sensors (9) jedoch freilässt.

Die Figur 2b zeigt schematisch die entsprechende Draufsicht zu dem in Figur 2a dargestellten Querschnitt. Der Temperatur-Sensor umfassend die beiden Leiterbahnen (3a, 3b) wird in Form von zwei dünnen Sensorbeschichtungen/Leiterbahnen aus unterschiedlichem Material erfindungsgemäß auf der Funktionsschicht (4) aufgebracht. Die beiden Leiterbahnen sind an einer Kontaktstelle (8) miteinander elektrisch leitend verbunden. Der Bereich (9), der für die äußere Kontaktierung mit den Ausgleichsleitungen vorgesehen ist, also die Enden der beiden Leiter des Sensors, werden von der weiteren Funktionsschicht (7) nicht mit abgedeckt. Sie bleiben daher frei zugänglich.

Die Figur 3 zeigt schematisch die Draufsicht eines erfindungsgemäß hergestellten Dehnungs-Sensors. Der Dehnungs-Sensor umfassend die mäanderförmig angeordnete dehnungsempfindliche Leiterbahn (3c) sowie die elektrischen Anschlussleitungen (3d, 3e) wird in Form von dünnen Sensorbeschichtungen/Leiterbahnen aus geeignetem Material erfindungsgemäß auf der Funktionsschicht (4) aufgebracht. Die Leiterbahnen sind an den Kontaktstellen (8) miteinander elektrisch leitend verbunden. Der Bereich (9), der für die äußere Kontaktierung vorgesehen ist, also die Enden der beiden Anschlussleitungen des Sensors, werden von der weiteren Funktionsschicht (7) nicht mit abgedeckt. Sie bleiben daher frei zugänglich.

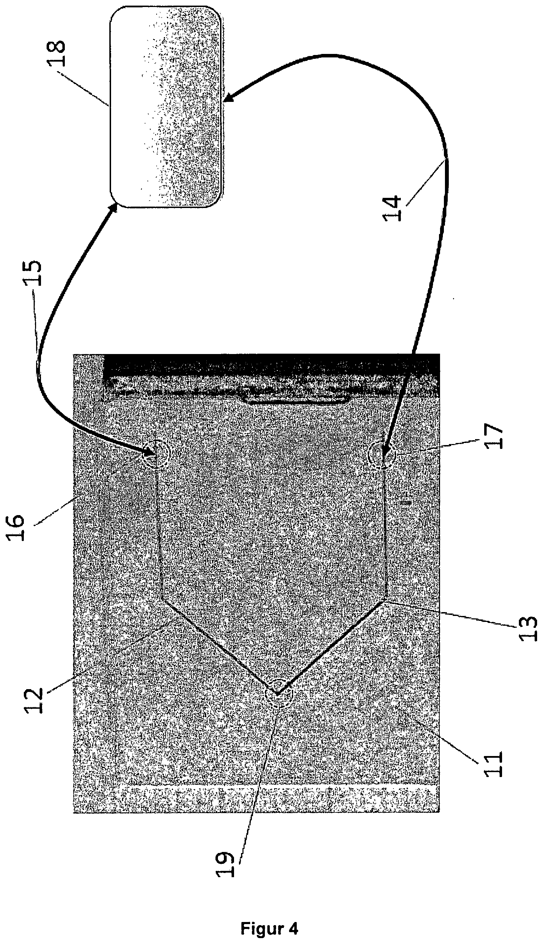

In einer Ausgestaltung der Erfindung wurde als Sensor ein Typ-K-Thermoelement erfindungsgemäß hergestellt (siehe dazu Figur 4). Dazu wurden zwei Leiterbahnen aus unterschiedlichen Materialien, in diesem Fall aus Alumel® (12) und aus Chromel® (13), im rechten Winkel zueinander auf der Funktionsschicht (11) eines metallischen Substrates über ein dem Laser-Auftragsschweißen ähnliches Verfahren aufgebracht. Die beiden Leiterbahnen sind über einen Verbindungspunkt (Kontaktstelle) (19) elektrisch miteinander verbunden. Für die Leiter wurden entsprechende Pulver mit einem Partikeldurchmesser von 2,6 bis 20 µm (d₅₀ = 7,4 µm) für Alumel® und von 3,5 bis 35 µm (d₅₀ = 12,1 µm) für Chromel® verwendet.

Die Aufbringung des Sensors auf die Funktionsschicht (11) erfolgte mit Hilfe eines Lasers, wobei die vorgenannten Pulver jeweils über eine koaxiale Zuführung dem Laserstrahl zugeführt wurden. Als Laser wurde ein Nd:YaG (Neodym-dotierter Yttrium-Aluminium-Granat-Laser) im unteren Leistungsbereich verwendet.

Zur Überprüfung der Funktionsfähigkeit des Temperatursensors und zur Ermittlung des Seebeck-Koeffizienten wurden die thermischen und elektrischen Daten des erfindungsgemäß hergestellten Thermoelementes bei Temperaturen zwischen Raumtemperatur und 500 °C gemessen. Dazu wurde der negative Leiter aus Alumel® (12) mit einer NiAl-Ausgleichsleitung (14) und der positive Leiter aus Chromel® (13) mit einer NiCr-Ausgleichsleitung (15) kontaktiert. Zur Kontaktierung wurden in einigem Abstand zum Kontaktpunkt die Ausgleichsleitungen (Kompensationsdrähte) jeweils auf den positiven und den negativen Leiter gedrückt (Kontaktstellen 16, 17) und jeweils mit einer kleinen Glasplatte und Metallklammern fixiert. Die anderen Enden der Kompensationsdrähte wurden mit dem Mess- und Aufzeichnungsgerät (Temperaturmessgerät) (18) verbunden, welches über einen Messwertwandler/Messwertumformer verfügt. Der Kontaktpunkt (19) bildet die Messstelle mit der Messtemperatur, während das Messgerät (18) die Vergleichsstelle mit der Referenztemperatur, typischerweise Raumtemperatur, integriert.

Zusätzlich wurde ein kommerziell erhältliches K-Typ-Thermoelement benachbart zur der Kontaktstelle (19) des erfindungsgemäß hergestellten Thermoelementes angeordnet, und ebenfalls mit dem Mess- und Aufzeichnungsgerät (18) verbunden.

Die Probe, umfassend wenigstens die Funktionsschicht sowie die zwei darauf angeordneten und mit dem Messgerät (18) verbundenen Thermoelemente, wurde in einem Ofen unter einer Argon Schutzgasatmosphäre mit einer Aufheizrate von 5 K/min aufgeheizt. Während des Versuchs wurden laufend die von den beiden Thermoelementen erzeugten Spannungen durch das Messgerät erfasst und ausgewertet.

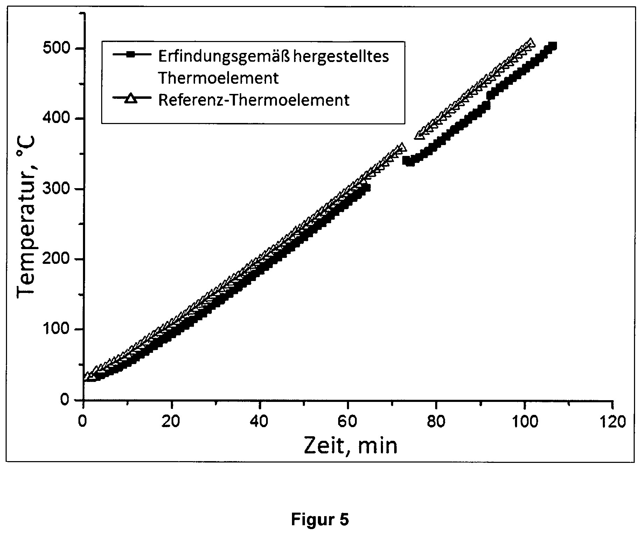

In Figur 5 sind die während des Versuchs durch das Messgerät erfassten Temperaturwerte über die Versuchszeit aufgezeigt. Die mit geschlossenen Symbolen markierte Linie stellt die Ergebnisse des erfindungsgemäß hergestellten Thermoelementes und die mit offenen Symbolen markierte Linie die Ergebnisse des Referenz-Thermoelementes dar. Vorübergehende Unterbrechungen der Messwertfolge, insbesondere für das erfindungsgemäß hergestellte Thermoelement, sind auf den schwankenden Kontaktwiderstand, der in diesem Versuch nur mittels metallischer Klammern angepressten Ausgleichsleitungen, hervorgerufen.

Durch Auswertung der ermittelten Spannungen konnte bestätigt werden, dass der erfindungsgemäß hergestellte Sensor im untersuchten Temperaturbereich eine nahezu lineare Abhängigkeit der erzeugten Spannung von der Temperatur aufweist. Aus den erfassten Thermospannungen konnte mit Hilfe einer linearen Anpassung ein Seebeck-Koeffizient als Maß für die thermoelektrische Empfindlichkeit von 41,2 µV/K bei einem Regressionsfaktor von 0,9999 ermittelt werden. Demgegenüber weisen kommerziell erhältliche Thermoelemente einen nominalen Seebeck-Koeffizient von 41,1 µV/K auf. Der Vergleich zeigt, dass die über das erfindungsgemäß herstellte Thermoelement erzeugten Spannungen als sehr vertrauenswürdig eingestuft werden können. Dieser Versuch belegt eindrucksvoll, dass der erfindungsgemäße Sensor bereits jetzt hervorragend als Temperatursensor eingesetzt werden kann.

Nach dieser Versuchsreihe wurde eine weitere Schicht, die in diesem Fall einer keramischen Funktionsschicht entsprach, mit Hilfe des atmosphärischen Plasmaspritzens aufgebracht. Dadurch konnte der auf der ersten Funktionsschicht (4) angeordnete Sensor (3) vollständig eingebettet werden.

Der Sensor liegt in diesem Fall eingebettet in den beiden Funktionsschichten vor. Die freien Leitungsenden des erfindungsgemäß hergestellten Sensors waren dabei über entsprechende Ausgleichsleitungen mit einem Mess- und Aufzeichnungsgerät verbunden, welches die während des Versuchs erzeugten elektrischen Signale erfassen konnte.

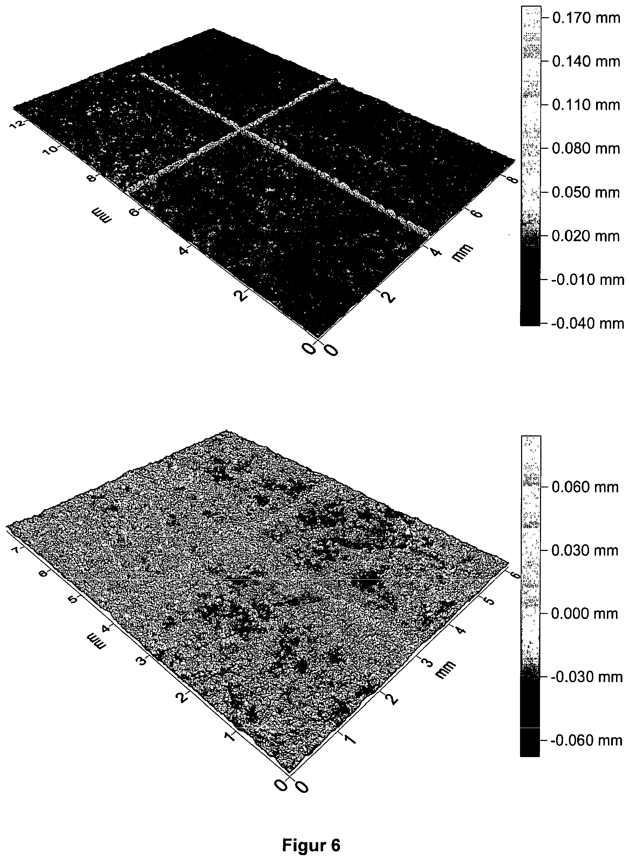

Die Schichtdicke der zweiten aufgebrachten Funktionsschicht lag bei ca. 200 µm. Beide Funktionsschichten wurden über Plasmaspritzen hergestellt und wiesen eine Oberflächenrauigkeit von ca. 40 µm auf. Versuche und leistungsfähige optische Messverfahren (Weißlichtinterferometrie) zur Ermittlung von Höhenprofilen eines eingebetteten Sensors zeigten anschaulich, dass bei einer Sensorhöhe (Höhe der aufgebrachten Leiterbahn) von ca. 90 µm und einer Schichtdicke der zweiten Funktionsschicht von ebenfalls ca. 200 µm, an der Stelle der Leiterbahnen nur noch eine Überhöhung der zweiten Funktionsschicht von ca. 40 µm zu erkennen ist. Dies belegt die gute Einbettung des Sensors in einer relativ dünnen zweiten Funktionsschicht. (siehe dazu auch Figur 6)

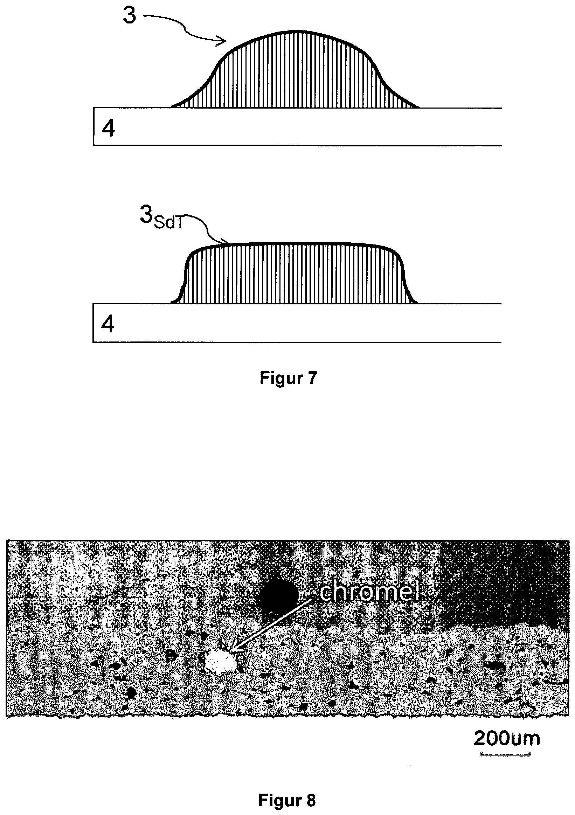

Es hat sich herausgestellt, dass es für einen Fachmann leicht möglich ist, einen über das erfindungsgemäße Verfahren auf einer Funktionsschicht aufgebrachten bzw. abgeschiedenen Sensor von einem solchen zu unterscheiden, der über die bislang üblichen Aufbringungsmethoden, wie Plasmaspritzen unter Anwendung von Masken erhalten werden. Ein Vergleich der unterschiedlichen Querschnitte am Beispiel einer Leiterbahn ist schematisch in Figur 7 dargestellt.

Der charakteristische Querschnitt einer Leiterbahn (3), die erfindungsgemäß aufgebracht wird, zeigt einen insgesamt bogenförmigen Verlauf, während eine Leiterbahn, die mit Hilfe einer Maske und mittels herkömmlichem Plasmaspritzen aufgebracht wurde, im Vergleich dazu im zentralen Bereich einen nahezu parallel zur Oberfläche der Funktionsschicht verlaufenden abgeflachten Querschnitt (3_{SdT}) zeigt und deutlich steilere Flanken aufweist. Dies liegt darin begründet, dass das Plasmaspritzen im Prinzip eine Methode zum flächigen, parallelen Aufbringen von Material ist, während das erfindungsgemäße Verfahren vorteilhaft zur Aufbringung von Linien oder Punkten geeignet ist. Je nach Oberflächenbeschaffenheit der Funktionsschicht und Benetzbarkeit kann bei dem erfindungsgemäßen Verfahren auch eine Unterschneidung erzeugt werden.

Die Figur 8 zeigt eine Querschnittsansicht von einer erfindungsgemäß auf einer Funktionsschicht aufgebrachten und eingebetteten Leiterbahn.

Zusammenfassend lässt sich sagen, dass die Erfindung ein deutlich verbessertes Verfahren zur Herstellung von Sensoren, insbesondere auch von *in-situ* Sensoren bereit stellt, wobei die Sensoren auch auf einer teilweise sehr groben Funktionsschicht abgeschieden werden können, ohne dass wie bislang üblich aufwändige Masken eingesetzt werden müssen. Durch die leichte Anpassung der Verfahrensparameter ist eine breite Anwendung sowohl in Bezug auf den herzustellenden Sensor, als auch auf die zu detektierende Funktionsschicht gegeben.

## Patentansprüche

1. Verfahren zur Herstellung eines Sensors (3) auf der Oberfläche einer Funktionsschicht (4), bei dem Sensormaterial (2) zumindest teilweise in einem Laserstrahl (1) aufgeschmolzen und im Anschluss auf die Oberfläche der Funktionsschicht (4) aufgebracht wird, wobei
- ein fokussierter Laser eingesetzt wird, dessen Einstrahlung auf die Oberfläche (4) gerichtet ist,
- das Sensormaterial (2) über eine koaxiale Zuführung dem Laserstrahl (1) zugeführt wird,
- während der Aufbringung des Sensormaterials (2) die Oberflächentemperatur der Funktionsschicht (4) derart eingestellt wird, dass sie niedriger als die Schmelztemperatur der Funktionsschicht (4) ist,
- wobei die Einstellung der Oberflächentemperatur der Funktionsschicht (4) durch eine Begrenzung des Wärmeeintrages durch Abschattung des Laserstrahls (1) durch das Sensormaterial (2) erzielt wird und
- der im Bereich eines Laserspots aufgeschmolzene Anteil des Sensormaterials (2) auf der Oberfläche der Funktionsschicht (4) abgeschieden wird.

2. Verfahren nach Anspruch 1, bei dem der Fokusquerschnitt der Zuführung des Sensormaterials auf der Substratebene größer gewählt wird, als der Querschnitt des fokussierten Laserstrahls.

3. Verfahren nach einem der Ansprüche 1 bis 2, bei dem als Funktionsschicht eine keramische Wärmedämmschicht, eine Isolationsschicht, eine Oxidations- (bzw. Korrosions-) Schutzschicht oder eine umgebungsstabile (Thermal-)Schutzschicht eingesetzt wird.

4. Verfahren nach einem der Ansprüche 1 bis 3, bei dem das Sensormaterial unter einer Schutzgasatmosphäre aufgebracht wird.

5. Verfahren nach vorhergehendem Anspruch, bei dem Argon als Schutzgas eingesetzt wird.

6. Verfahren nach einem der Ansprüche 1 bis 5, bei dem als Sensormaterial Pulver mit einem mittleren Partikeldurchmesser zwischen 1 und 200 µm, insbesondere zwischen 2 und 50 µm eingesetzt wird.

7. Verfahren nach einem der Ansprüche 1 bis 6, bei dem die Strukturquerschnitte des aufgebrachten Sensors klein gegenüber den Abmessungen der Funktionsschicht sind.

8. Verfahren nach einem der Ansprüche 1 bis 5, bei dem als Sensormaterial Platin, Eisen, Kupfer-Nickel-Legierungen, Platin-Rhodium-Legierungen, Nickel-Chrom-Legierungen, Wolfram-Rhenium-Legierungen, CrNi-Stahl, Nickel, Ni-20Cr, Cu-45Ni, Pd-13Cr, Cu-12Mn-2Ni, Barium-Titanat- oder Blei-Zirkonat-Titanat-Keramiken (PZT), Quarz, Turmalin, Galliumphosphat oder Lithiumniobat eingesetzt werden.

9. Verfahren nach einem der Ansprüche 1 bis 8 bei dem ein Temperatur-, Druck-, Spannungs- oder Beschleunigungssensor hergestellt wird.

10. Verfahren nach einem der Ansprüche 1 bis 9, bei dem der auf die Oberfläche der Funktionsschicht aufgebachte Sensor durch Aufbringung einer weiteren Schicht zumindest teilweise eingebettet wird.

11. Verfahren nach vorhergehendem Anspruch, bei dem als weitere Schicht eine weitere Funktionsschicht aufgebracht wird.

12. Sensor (3), **dadurch gekennzeichnet, dass** er auf der Oberfläche einer Funktionsschicht (4) angeordnet ist und durch ein Verfahren nach einem der Ansprüche 1 bis 11 hergestellt wurde.

13. Sensor nach Anspruch 12, wobei es sich um einen Temperatur-, Druck-, Spannungs- oder Beschleunigungssensor handelt.

14. Sensor nach einem der Ansprüche 12 bis 13, bei dem das aufgebrachte Sensormaterial unterbrechungsfrei und porenfrei ausgestaltet ist.

## Claims

1. Method of producing a sensor (3) on the surface of a functional layer (4), in which sensor material (2) is at least partially melted in a laser beam (1) and is subsequently applied to the surface of the functional layer (4), wherein a focused laser is used, the irradiation of which is directed at the surface (4), wherein the sensor material (2) is supplied to the laser beam (1) via a coaxial supply line, wherein, during the application of the sensor material (2), the surface temperature of the functional layer (4) is set in such a manner that it is lower than the melting temperature of the functional layer (4), wherein the surface temperature of the functional layer (4) is set by limiting the heat input by shielding the laser beam (1) by the sensor material (2) and wherein the portion of the sensor material (2) melted in the region of a laser spot is deposited on the surface of the functional layer (4).

2. Method according to claim 1, in which the focus cross section of the supply line of the sensor material on the substrate plane is selected in such a manner that it is greater than the cross section of the focused laser beam.

3. Method according to one of claims 1 to 2, in which a ceramic thermal barrier layer, an insulating layer, an anti-oxidation (or anti-corrosion) layer or an environmentally stable (thermal) protective layer is used as the functional layer.

4. Method according to one of claims 1 to 3, in which the sensor material is applied in an inert gas atmosphere.

5. Method according to the preceding claim, in which argon is used as the inert gas.

6. Method according to one of claims 1 to 5, in which powder having an average particle diameter of between 1 and 200 µm, in particular between 2 and 50 µm, is used as the sensor material.

7. Method according to one of claims 1 to 6, in which the structural cross sections of the sensor applied are small in comparison to the dimensions of the functional layer.

8. Method according to one of claims 1 to 5, in which platinum, iron, copper-nickel alloys, platinum-rhodium alloys, nickel-chromium alloys, tungsten-rhenium alloys, CrNi steel, nickel, Ni-20Cr, Cu-45Ni, Pd-13Cr, Cu-12Mn-2Ni, barium titanate or lead zirconate titanate ceramics (PZT), quartz, tourmaline, gallium phosphate or lithium niobate are used as the sensor material.

9. Method according to one of claims 1 to 8, in which a temperature, pressure, stress or acceleration sensor is produced.

10. Method according to one of claims 1 to 9, in which the sensor applied to the surface of the functional layer is at least partially embedded by the application of a further layer.

11. Method according to the preceding claim, in which a further functional layer is applied as the further layer.

12. Sensor (3), **characterised in that** it is arranged on the surface of a functional layer (4) and was produced by a method according to one of claims 1 to 11.

13. Sensor according to claim 12, wherein it is a temperature, pressure, stress or acceleration sensor.

14. Sensor according to one of claims 12 to 13, in which the sensor material applied is designed to be interruption-free and pore-free.

## Revendications

1. Procédé de fabrication d'un capteur (3) à la surface d'une couche (4) fonctionnelle,
dans lequel on fait fondre le matériau (2) du capteur, au moins en partie, dans un faisceau (1) laser et on le dépose ensuite à la surface de la couche (4) fonctionnelle,
dans lequel
- on utilise un laser focalisé, dont le rayonnement incident est dirigé sur la surface (4),
- on apporte le matériau (2) du capteur au faisceau (1) laser par un apport coaxial,
- pendant le dépôt du matériau (2) du capteur, on règle la température de surface de la couche (4) fonctionnelle, de manière à ce qu'elle soit plus basse que le point de fusion de la couche (4) fonctionnelle,
- dans lequel on obtient le réglage de la température de surface de la couche (4) fonctionnelle par une limitation de l'apport de chaleur, en occultant le faisceau (1) laser passant dans le matériau (2) du capteur et
- on dépose la proportion, fondue dans la région d'une tâche laser, du matériau (2) du capteur à la surface de la couche (4) fonctionnelle.

2. Procédé suivant la revendication 1, dans lequel on choisit la section transversale du foyer de l'apport du matériau du capteur sur le plan du substrat plus grande que la section transversale du faisceau laser focalisé.

3. Procédé suivant l'une des revendications 1 à 2, dans lequel on utilise, comme couche fonctionnelle, une couche calorifuge en céramique, une couche isolante, une couche de protection vis-à-vis de l'oxydation (ou de la corrosion) ou une couche de protection (thermique) stable vis-à-vis de l'atmosphère extérieure.

4. Procédé suivant l'une des revendications 1 à 3, dans lequel on dépose le matériau du capteur sous une atmosphère de gaz de protection.

5. Procédé suivant la revendication précédente, dans lequel on utilise de l'argon comme gaz de protection.

6. Procédé suivant l'une des revendications 1 à 5, dans lequel on utilise, comme matériau du capteur, de la poudre ayant un diamètre moyen de particule compris entre 1 et 200 µm, notamment entre 2 et 50 µm.

7. Procédé suivant l'une des revendications 1 à 6, dans lequel les sections transversales de structure du capteur déposé sont petites par rapport aux dimensions de la couche fonctionnelle.

8. Procédé suivant l'une des revendications 1 à 5, dans lequel on utilise, comme matériau de capteur, du platine, du fer, des alliages de cuivre et de nickel, des alliages de platine et de rhodium, des alliages de nickel et de chrome, des alliages de tungstène et de rhénium, de l'acier au CrNi, du nickel, du Ni-20Cr, du Cu-45Ni, du Pd-13Cr, du Cu-12Mn-2Ni, des céramiques en titanate de baryum ou en titanate zirconate de plomb (PZT), du quartz, de la tourmaline, du phosphate de gallium ou du niobate de lithium.

9. Procédé suivant l'une des revendications 1 à 8, dans lequel on fabrique un capteur de température, de pression, de contrainte ou d'accélération.

10. Procédé suivant l'une des revendications 1 à 9, dans lequel on incorpore, au moins en partie, le capteur déposé à la surface de la couche fonctionnelle par dépôt d'une autre couche.

11. Procédé suivant la revendication précédentes, dans lequel on déposé, comme autre couche, une autre couche fonctionnelle.

12. Capteur (3),
**caractérisé en ce qu'**il est disposé à la surface d'une couche (4) fonctionnelle et a été fabriqué par un procédé suivant l'une des revendications 1 à 11.

13. Capteur suivant la revendication 12, qui est un capteur de température, de pression, de contrainte ou d'accélération.

14. Capteur suivant l'une des revendications 12 à 13, dans lequel le matériau de capteur déposé est sans interruption et sans pore.
